# EUROPEAN PATENT SPECIFICATION

(11) **EP 3 915 760 B1**
(45) Date of publication and mention of the grant of the patent: **09.10.2024**
(21) Application number: 21175689.5
(22) Date of filing: 25.05.2021
(51) Int. Cl.: B29C 48/90, B29C 48/25, B29C 48/88, B29C 48/09, B29C 48/11, B29C 48/12

(54) **SYSTEM OF CALIBRATION MATRIXES FOR EXTRUDING PLASTIC PROFILES AND A CALIBRATION MATRIX THEREOF**
KALIBRIERMATRIZENSYSTEM ZUM EXTRUDIEREN VON KUNSTSTOFFPROFILEN UND KALIBRIERMATRIX DAFÜR
SYSTÈME DE MATRICES DE CALIBRAGE POUR L'EXTRUSION DE PROFILÉS EN PLASTIQUE ET MATRICE DE CALIBRAGE CORRESPONDANTE

(30) Priority: 27.05.2020 EE 202000009
(43) Date of publication of application: 01.12.2021
(73) Proprietor: Tiree OÜ, 64405 Jaanikeste küla (EE)
(72) Inventor: Rannu, Ilo, 75417 Mõisaküla (EE)
(74) Representative: AAA Patendibüroo OÜ

(56) References cited:
- EP-A1- 0 925 905
- EP-B1- 2 937 199
- JP-A- 2002 001 799
- JP-A- S6 046 227
- RU-C1- 2 233 742

## Description

### TECHNICAL FIELD

The present invention relates to the field of plastic industry, more specifically, the present invention relates to a system of calibration matrices and calibration matrices thereof for continuous extrusion of plastic, preferably profiles from reprocessed plastic.

### BACKGROUND ART

A system of calibration matrices closest to the present invention is known from the European patent EP2937199B1. This patent describes a system and method for extruding profiles made of reprocessed unidentified mixed plastic waste.

The system of calibration matrices known from this patent comprises four consecutive calibration matrices, whereby each calibration matrix has been formed of a bottom, a cover and the sides between them, which comprise cooling channels and form upon mutual rigid connection the inner chamber running in longitudinal direction of the calibration matrix between the bottom, the cover and the sides, the shape of cross section of which conforms to the extruded plastic profile.

In the direction of movement of the extruded profile, each following calibration matrix has an inner chamber with a cross section, which is 0.5 mm larger than in the previous one, whereby the cross section of the last calibration matrix in the direction of extrusion (i.e. the size of the profile) has the same dimensions as the extruded final product (profile).

The described solution has several deficiencies. First, each calibration matrix comprises at least four separate details, the precise manufacturing and assembly of which makes the production of the respective calibration matrix expensive and time-consuming. Furthermore, in this solution, the cross section of the inner chamber of every following calibration matrix should be made larger than the previous one, which makes the production of the entire system complicated and expensive, and does not allow mutual exchange of the calibration matrices. In addition, two larger 1000 mm calibration matrices are extremely difficult to handle by the operator, requiring lifting mechanisms or at least two persons for installation and opening.

Furthermore, this solution does not provide sufficient surface smoothness to the extruded plastic profile, which is necessary, for example, for its coating with a laminated layer or qualitative differentiation, for example, from similar plastic profiles produced with a die casting method. This is due to the fact that plastics with different melting temperature in the mixture adhere to the surface of the inner chamber of the calibration matrix, causing uneven and rough surface of the extruded profile.

In the case of calibration matrices located continuously without gaps, it is also impossible to control surface quality of the extruded profile, or if the profile fills perfectly the calibration matrix, before exiting from the last calibration matrix.
JP2002001799A discloses a sizing matrix for an extruded product, where said matrix comprises four separate parts, an upper block, a lower block and first and second core blocks. In said matrix a cooling liquid is directed through a plurality of guide holes between the extruded product and surfaces of inner chamber of the matrix and thus the friction between said surfaces and extruded product is decreased.
RU2233742C2 discloses a method for producing extruded profiles, where several consecutive calibration matrices are used, each matrix comprising a bottom half and upper half and an inner chamber between them. In order to increase wear resistance and corrosion resistance of the surfaces of the inner chamber, said surfaces are subject to electrochemical treatment to obtain on their surface an oxide anodic coating, known as "hard anodizing". The disadvantage of said solution is that when reprocessed plastic is used, which contains impurities, said impurities would become into direct contact of the surfaces of inner chamber of the matrix, thus damaging said surfaces. A disadvantage of said solution is that said matrices do not contain interchangeable parts, because in this solution individual matrices have different lengths.
Also, a common disadvantage of solutions JP2002001799A and RU2233742C2 is that when reprocessed plastic is used, which usually contains impurities, said impurities would become into direct contact of the surfaces of inner chamber of the matrix, thus damaging said surfaces. Reconditioning said surfaces requires specialized equipment, making said process laborious and expensive.

### SUMMARY OF INVENTION

The present invention is intended for extruding profiles made of raw material (agglomerate, pellets, crushed pieces, etc.) mixed based on a respective recipe, reprocessed from unrefined plastic, such as LDPE, HDPE, PE, PP, PS and ABS. This is not a mixed plastic comprised of unidentified plastic waste, but mixture of reprocessed plastics of relevant type (LDPE, HDPE, PE, PP, PS, ABS), into which colorants, stabilizer/stabilizers (e.g. for protection against UV radiation and thermal decomposition), blowing agent, absorbent or other additives and pure (i.e. fresh) plastic may be added, if necessary.

Although all used abbreviations are standard and have been used in the field for a long time, it should be mentioned for the sake of clarity that the above abbreviations mean the following plastics:
PP - polypropylene;
ABS - acrylic nitrile-butadiene-styrene;
PS - polystyrene;
PE - polyethylene;
HDPE - high density polyethylene;
LDPE - low density polyethylene;
PET - polyethylene terephthalate.

A typical system for extruding profiles from raw material comprising reprocessed plastic waste comprises a continuously operating extruder, followed by a system of calibration matrices, where solidification of molten plastics takes place, along with the provision of the required cross section to the extruded profile and calibration and the primary cooling of the extruded profile.

The system of calibration matrices is followed by a cooling tank, through which the extruded profile is fed, and where additional cooling of the profile takes place.

The cooling tank is followed by the pull-through device (more specifically a so-called pultrusion device), which feeds the profile through the calibration matrices and cooling tank to the cutting device, where the extruded profile is cut into details with predetermined length.

The deficiencies of prior art are eliminated with the system of calibration matrices for extruding plastic profile comprising several consecutive calibration matrices on a common base, wherein each calibration matrix comprises a bottom half of the calibration matrix and an upper half of the calibration matrix, whereby both upper as well as bottom half comprise cooling channels.

An inner chamber running in longitudinal direction of the calibration matrix is formed between the upper half and bottom half of the calibration matrix in the assembled position of upper half and bottom half, the cross section of which conforms to the extruded profile, the surface of which is coated with anti-adhesive antifriction material.

There is an observation gap between at least some consecutive calibration matrices, whereby the mentioned observation gaps are preferably located between consecutive calibration matrices outside the solidification zone of plastic profile in the direction of extrusion.

The anti-adhesive antifriction material is preferably a glass fibre fabric or tape with a self-adhesive layer coated with polytetrafluoroethylene (PTFE; Teflon^{®}) adhered to the surface of the inner chamber.

The system of calibration matrices preferably comprises at least two calibration matrices.

In the direction of extrusion of the plastic profile, the upper and bottom halves of the first calibration matrix are mutually detachably rigidly connected in the compression and solidification zone of the plastic profile, and outside the solidification zone of the plastic profile, the upper and bottom halves of the remaining calibration matrices are held together during extrusion with the pressure applied to the upper halves by pneumatic or hydraulic cylinders or any other mechanism with a similar purpose.

Cooling and calibration zones with different temperatures are preferably formed in the calibration matrices separated with an observation gap.

The pneumatic or hydraulic cylinders or any other mechanism with a similar purpose are preferably configured to lift the upper halves of the calibration matrices up from the bottom halves to enable quick access to the inner chamber.

In a preferred embodiment, the first cooling and compression zone is located in the first calibration matrix.

In a preferred embodiment, at least some calibration matrices of the system are made as similar exchangeable modules.

The number and length of calibration matrices depends on the complexity and the cross section of the extruded profile. If the required cross section and temperature of the profile are achieved with shorter and fewer calibration matrices, it is possible. Extrusion speed, length and number of calibration matrices, and cross section of extruded profile are also related. Longer cooling process is needed for retaining the speed of production of the profile.

As a technical example, calibration matrices with various lengths have been used, e.g. 250 mm, 500 mm and 1000 mm. Combined into a system of matrices with different lengths, they have all provided the required result.

Even more preferably, all calibration matrices of the system have been made as similar exchangeable modules, which would enable fast exchange of module, e.g. in case of damage of the glass fibre fabric or tape with a self-adhesive layer coated with polytetrafluoroethylene (PTFE; Teflon^{®}) adhered to the surface of the inner chamber.

The present invention further provides a calibration matrix for use in the above described system of calibration matrices for extruding a plastic profile, comprising a bottom half of the calibration matrix and an upper half of the calibration matrix, where both upper and bottom halves comprise cooling channels, wherein an inner chamber running in longitudinal direction of the calibration matrix is formed between the upper half and bottom half of the calibration matrix in the assembled position of the upper half and bottom half, the cross section of which conforms to the extruded profile and the surface of which is coated with anti-adhesive antifriction material, which is preferably a glass fibre fabric with a self-adhesive layer coated with polytetrafluoroethylene (PTFE; Teflon^{®}) adhered to the surface of the inner chamber.

### BRIEF DESCRIPTION OF DRAWINGS

The present invention is further described with exemplary embodiments, with references to accompanying schematic figures, where:
Figure 1 is a general simplified view of the system for extruding profiles from raw material comprising reprocessed plastic waste, where the system of calibration matrices of the invention has been used;
Figure 2 is a general view of the system of calibration matrices of the invention, comprising several calibration matrices;
Figure 3 is a view of a calibration matrix of the invention in open position;
Figure 4 is a view of a calibration matrix of the invention in closed position;
Figures 5 and 6 are respectively side and front views of another embodiment of a calibration matrix of the invention in closed position;
Figure 7 is the front view of the calibration matrix of Figures 5 and 6 in open position.
Figures 8 and 9 on are respectively side and front views of the third embodiment of a calibration matrix of the invention in closed position;
Figure 10 is the front view of the calibration matrix of Figures 8 and 9 in open position.

### DESCRIPTION OF EMBODIMENTS

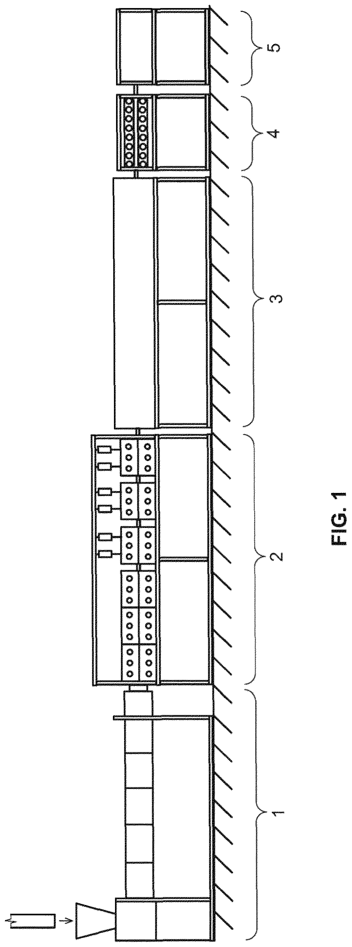

Figure 1 is a simplified view, for the sake of clarity (i.e. without connection hoses of coolant connected to the calibration matrices and other equipment), of a possible system for extruding profiles from raw material comprising reprocessed plastic waste. It comprises a continuously operating extruder 1 with e.g. one worm, followed by the system of calibration matrices 2 where the solidification of molten plastics takes place, along with provision of the required cross section to the extruded profile and calibration and the primary cooling of the extruded profile.

The system of calibration matrices 2 is followed by a cooling tank 3 with cooling water, through which the extruded profile is fed, ensuring its additional cooling.

The cooling tank 3 is followed by the pull-through device 4, which feeds the profile through the calibration matrices 7 and cooling tank 3 to the cutting device 5, where the extruded profile is cut into details with a predetermined length. Further on, a collection unit of cut details will follow (not depicted).

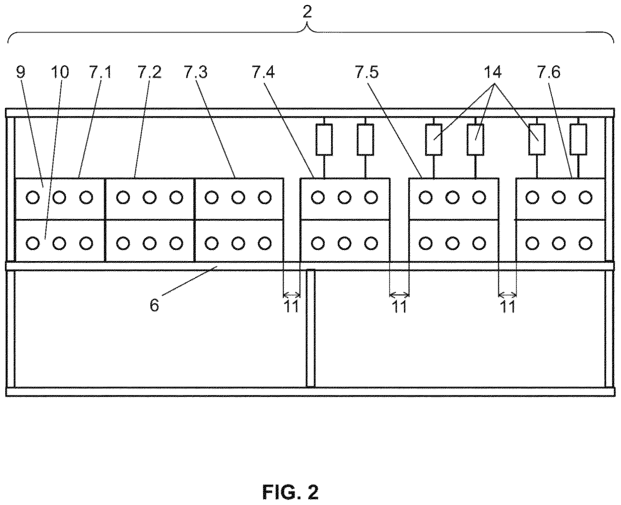

The system of calibration matrices 2 of the invention depicted in Figure 2 comprises in the depicted embodiment six calibration matrices 7 fixed onto a common base 6. In the depicted embodiment, the leftmost calibration matrix 7.1 is rigidly fixed to the extruder 1 nozzle through a seal.

Molten plastic mass is pressed from the extruder 1 into the inner chamber 8 of the first calibration matrix 7.1, the cross-section profile of which conforms to the shape of the extruded plastic profile and which is the first cooling zone of the profile. In the depicted embodiment, three first calibration matrices 7.1, 7.2, and 7.3 are connected tightly endways together, as the solidification and compression of molten plastic is still taking place inside them. Upper halves 9 and bottom halves 10 of the mentioned calibration matrices 7.1, 7.2, and 7.3 are rigidly mutually connected together, as otherwise the pressure of molten plastic would press the mentioned halves apart. The following calibration matrices 7.4, 7.5, and 7.6 are located in relation to the previous matrices in such way that there is an observation gap 11 between the calibration matrices 7.3 and 7.4, 7.4 and 7.5, and 7.5 and 7.6.

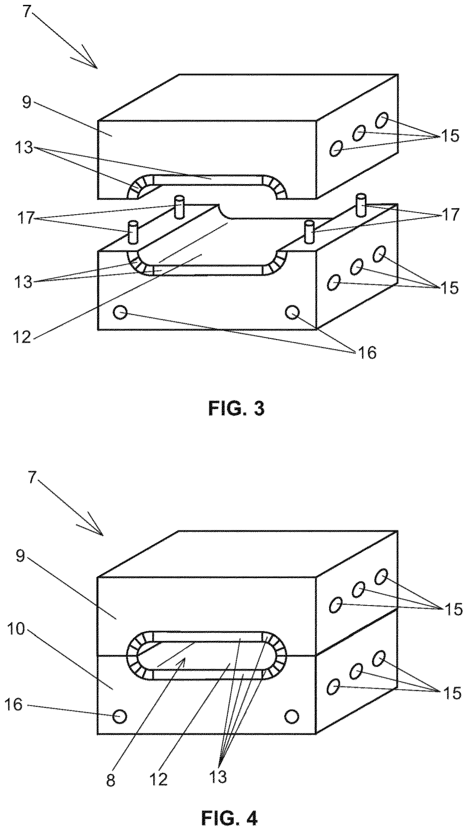

Calibration matrices 7 (7.1-7.6) consist of a bottom half 10 and an upper half 9. In the assembled position (Figure 4), the inner chamber 8 is formed between them, the surface of which is coated with anti-adhesive antifriction material 12 - the edges of this material 13 are turned onto the ends of the calibration matrices 7.

Both halves 9 and 10 comprise cooling channels 15. In addition, there are alignment pins 17 between the halves 9 and 10, and for example, the end surface of the bottom half 10 has apertures 16 for the pins.

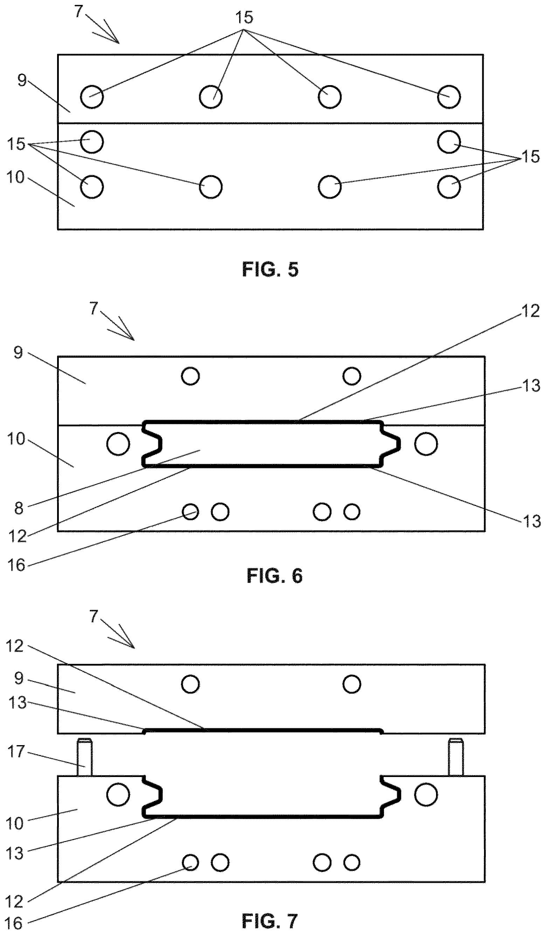

Figures 5 to 7 show a following embodiment of the calibration matrix of the invention, which is intended for extruding a so-called matchboard profile, which is relatively thin - similar details are numbered on these figures as on figures 3 and 4.

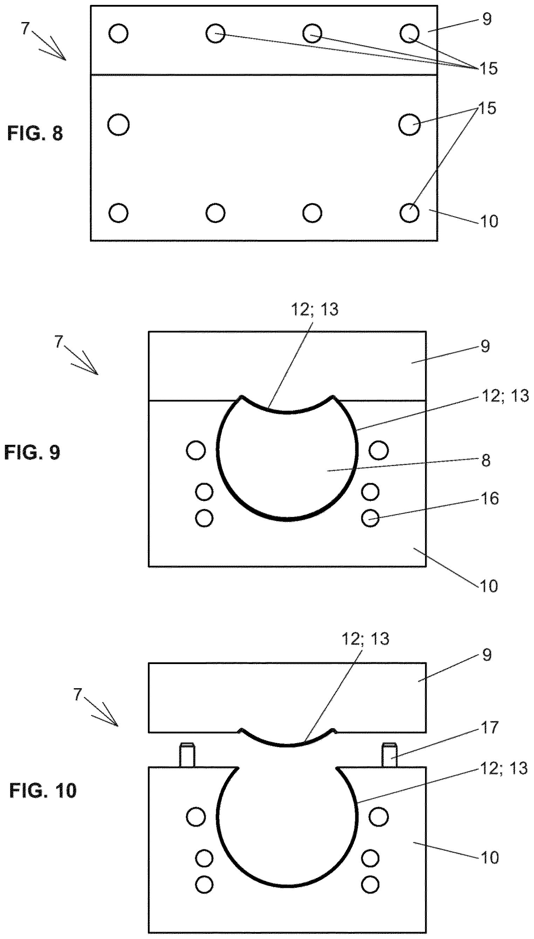

Figures 8 to 10 show a third embodiment of the calibration matrix of the invention, which is intended for extruding a so-called round profile, which is relatively thick - similar details are numbered on these figures as on figures 3 and 4.

Calibration matrix 7 is made of steel or aluminium alloy, which efficiently conducts heat away from the surface of the profile, e.g. alloy AA7075.

Antifriction material 12 is a glass fibre fabric (tape) with a self-adhesive layer coated with polytetrafluoroethylene (PTFE - Teflon^{®}) adhered to the surface of the inner chamber 8.

If foreign bodies (metal pieces, stones, etc.) present in the reprocessed plastic cause damage to the coating of the mentioned antifriction material 12, the operator can see immediately through the mentioned observation gap 11 any traces on the surface of the extruded profile, or if the calibration mould is completely filled by the profile (cavities, etc.), and the extrusion process can be stopped, halves 9 and 10 of corresponding calibration matrix 7 can be detached, and antifriction material 12 or corresponding calibration matrix 7 can be replaced.

In the system of calibration matrices 2 of Figure 2, the upper halves 9 of calibration matrices 7.4-7.6 are pressed onto the bottom halves 10 with pneumatic cylinders 14. The cylinders 14 also enable fast lifting of the upper halves 9 from the bottom halves 10 and thus fast access to the inner chamber 8.

It is clear for a person skilled in the art that instead the mentioned pneumatic cylinders, it is possible to use hydraulic cylinders or any other mechanism with a similar purpose, such as an articulated mechanism with an electric drive.

In a preferred embodiment, in the system of calibration matrices 2, the calibration matrices 7.1-7.6 are made as similar exchangeable modules. This simplifies their production and for example, such embodiment also enables keeping one such module in store for the fast replacement of a module with damaged coating of anti-friction material 12. The modular construction consisting of two halves 9 and 10 also reduces essentially the cost of calibration matrix 7.

Depending on the composition of the used reprocessed plastic, it may expand slightly when passing through the calibration matrices. To minimize this, intermediate sheets (not depicted) with thickness up to 0.4 mm can be inserted between the upper half 9 and the bottom half 10 of the calibration matrices 7.4, 7.5 and 7.6 to decrease the pressure applied by the upper and bottom halves 9 and 10 of the calibration matrices 7.4, 7.5 and 7.6 from the side of surfaces of the inner chamber 8 to the extruded profile, and to enable the profile to pass through these calibration matrices more easily. In such way, all single calibration matrices can be manufactured with the same dimensions, i.e. mutually exchangeable, and e.g. in the case of a flat matchboard profile, the pressure applied to the extruded profile by rearward calibration matrices in the direction extrusion can be minimized, if necessary.

The calibration matrix of Figures 5 to 7 is intended for manufacturing an extruded matchboard profile, which is relatively thin (see Figure 6), and therefore it is also suitable for extruding reprocessed plastic, which comprises e.g. following in percentage by weight:
PP (e.g. reprocessed mayonnaise and ketchup bottles): 25 to 40%;
ABS/PS (e.g. plastics from reprocessed electronic equipment): 20 to 40 percent by weight;
PE/HDPE/LDPE (e.g. reprocessed plastic bags): 15 to 35%;
foreign substances (minerals, PET, metal, cardboard, wood): up to 10 percent by weight;
colorant, stabilizer (UV radiation protection), blowing agent, absorbent, etc.: 1 to 10 percent by weight.

The calibration matrix of Figures 8 to 10 is intended for manufacturing an extruded round profile, which is relatively thick (see Figure 9), and therefore, it is also suitable for extruding reprocessed plastic, which comprises e.g. following in percentage by weight:
PP: 35 to 55 percent by weight;
ABS/PS (e.g. plastics from electronic equipment): 10 to 20 percent by weight;
PE/HDPE/LDPE: 25 to 45%;
foreign substances (minerals, PET, metal, cardboard, wood): up to 10 percent by weight;
colorant, stabilizer (UV radiation protection), blowing agent, absorbent, etc.: 1 to 10 percent by weight.

It is obvious to a person skilled in the art that the invention is not limited by the above described exemplary embodiments, but within the scope of the attached claims also other embodiments are possible.

## Claims

1. A system (2) of calibration matrices (7) for extruding a plastic profile, said system comprising several consecutive calibration matrices (7),
each calibration matrix (7) comprises a bottom half of the calibration matrix (10) and an upper half of the calibration matrix (9), wherein both upper as well as bottom halves (9, 10) comprise cooling channels (15),
wherein an inner chamber (8) running in the longitudinal direction of the calibration matrix (7) is formed between the upper half and bottom half (9, 10) of the calibration matrix in the assembled position of the upper half and bottom half (9, 10), the cross section of which conforms to the extruded profile and
the surface of which is coated with anti-adhesive antifriction material (12) wherein there is an observation gap (11) between at least some consecutive calibration matrices,
**characterized in that** the anti-adhesive antifriction material (12) is a glass fibre fabric or tape with a self-adhesive layer coated with polytetrafluoroethylene (PTFE) adhered to the surface of the inner chamber (8).

2. The system (2) of calibration matrices according to claim 1, ***characterized in that*** the first cooling and compression zone is located in the first calibration matrix (7.1).

3. The system (2) of calibration matrices according to any previous claim, ***characterized in that,*** in the direction of the extrusion of the plastic profile, the upper and bottom halves (9, 10) of the first calibration matrix are mutually detachably rigidly connected, and the upper and bottom halves (9, 10) of the remaining calibration matrices (7) are held together during extrusion with the pressure applied to the upper halves by pneumatic or hydraulic cylinders (14) or any other mechanism with a similar purpose.

4. The system (2) of calibration matrices according to claim 3, ***characterized in that*** the pneumatic or hydraulic cylinders (14) or any other mechanism with a similar purpose are configured to lift the upper halves (9) of calibration matrices (7) up from the bottom halves (10).

5. The system (2) of calibration matrices according to any previous claim, ***characterized in that*** at least some calibration matrices (7) of the system (2) are made as similar exchangeable modules.

6. The system (2) of calibration matrices according to any previous claim 1 to 4, ***characterized in that*** all calibration matrices (7) of the system (2) are made as similar exchangeable modules.

7. The system (2) of calibration matrices according to any previous claim, ***characterized in that*** cooling and calibration zones with different temperatures are formed in the calibration matrices (7.4, 7.5, 7.6) separated with observation gap (11).

8. A calibration matrix (7) for use in a system (2) of calibration matrices according to any of claims 1 to 7 for extruding a plastic profile, the calibration matrix (7) comprises a bottom half of the calibration matrix (10) and an upper half of the calibration matrix (9), wherein both upper as well as bottom halves (9, 10) comprise cooling channels (15) and an inner chamber (8) running in the longitudinal direction of the calibration matrix (7) is formed between the upper half and bottom half (9, 10) of the calibration matrix in the assembled position of the upper half and bottom half (9, 10), the cross section of which conforms to the extruded profile and the surface of which is coated with anti-adhesive antifriction material (12),
**characterized in that** the anti-adhesive antifriction material (12) is a glass fibre fabric or tape with a self-adhesive layer coated with polytetrafluoroethylene (PTFE) adhered to the surface of the inner chamber (8).

## Patentansprüche

1. System (2) von Kalibriermatrizen (7) zum Extrudieren eines Kunststoffprofils, wobei das System mehrere aufeinanderfolgende Kalibriermatrizen (7) umfasst,
jede Kalibriermatrix (7) eine untere Hälfte der Kalibriermatrix (10) und eine obere Hälfte der Kalibriermatrix (9) umfasst, wobei beide, die obere und die untere Hälfte (9, 10) Kühlkanäle (15) umfassen,
wobei eine Innenkammer (8), die in der Längsrichtung der Kalibriermatrix (7) verläuft, zwischen der oberen Hälfte und der unteren Hälfte (9, 10) der Kalibriermatrix in der zusammengesetzten Position der oberen Hälfte und unteren Hälfte (9, 10) gebildet ist, deren Querschnitt dem extrudierten Profil entspricht und
deren Oberfläche mit einem reibungsmindernden Antihaft-Material (12) beschichtet ist, wobei zwischen mindestens einigen aufeinanderfolgenden Kalibriermatrizen ein Beobachtungsspalt (11) vorhanden ist,
**dadurch gekennzeichnet, dass** das
reibungsmindernde Antihaft-Material (12) ein Glasfasergewebe oder -band mit einer selbsthaftenden mit Polytetrafluorethylen (PTFE) beschichteten Schicht ist, das an der Oberfläche der Innenkammer (8) anhaftet.

2. System (2) von Kalibriermatrizen nach Anspruch 1, **dadurch gekennzeichnet, dass** sich die erste Kühl- und Kompressionszone in der ersten Kalibriermatrix (7.1) befindet.

3. System (2) von Kalibriermatrizen nach einem vorstehenden Anspruch, **dadurch gekennzeichnet, dass** in der Richtung der Extrusion des Kunststoffprofils die obere und untere Hälfte (9, 10) der ersten Kalibriermatrix lösbar, starr miteinander verbunden sind und die obere und untere Hälfte (9, 10) der verbleibenden Kalibriermatrizen (7) während der Extrusion durch den Druck zusammengehalten werden, der durch pneumatische oder hydraulische Zylinder (14) oder jeden anderen Mechanismus mit einem ähnlichem Zweck auf die oberen Hälften ausgeübt wird.

4. System (2) von Kalibriermatrizen nach Anspruch 3, **dadurch gekennzeichnet, dass** die pneumatischen oder hydraulischen Zylinder (14) oder jeder andere Mechanismus mit einem ähnlichem Zweck konfiguriert sind, um die oberen Hälften (9) von Kalibriermatrizen (7) von den unteren Hälften (10) anzuheben.

5. System (2) von Kalibriermatrizen nach einem vorstehenden Anspruch, **dadurch gekennzeichnet, dass** mindestens einige Kalibriermatrizen (7) des Systems (2) als ähnliche austauschbare Module hergestellt sind.

6. System (2) von Kalibriermatrizen nach einem vorstehenden Anspruch 1 bis 4, **dadurch gekennzeichnet, dass** alle Kalibriermatrizen (7) des Systems (2) als ähnliche austauschbare Module hergestellt sind.

7. System (2) von Kalibriermatrizen nach einem vorstehenden Anspruch, **dadurch gekennzeichnet, dass** in den durch einen Beobachtungsspalt (11) getrennten Kalibriermatrizen (7.4, 7.5, 7.6) Kühl- und Kalibrierzonen mit unterschiedlichen Temperaturen gebildet sind.

8. Kalibriermatrix (7) zur Verwendung in einem System (2) von Kalibriermatrizen nach einem der Ansprüche 1 bis 7 zum Extrudieren eines Kunststoffprofils, wobei die Kalibriermatrix (7) eine untere Hälfte der Kalibriermatrix (10) und eine obere Hälfte der Kalibriermatrix (9) umfasst, wobei beide, die obere sowie untere Hälfte (9, 10) Kühlkanäle (15) umfassen, und eine Innenkammer (8), die in der Längsrichtung der Kalibriermatrix (7) verläuft, zwischen der oberen Hälfte und unteren Hälfte (9, 10) der Kalibriermatrix in der zusammengesetzten Position der oberen Hälfte und unteren Hälfte (9, 10) gebildet ist, deren Querschnitt dem extrudierten Profil entspricht und deren Oberfläche mit einem reibungsmindernden Antihaft-Material (12) beschichtet ist, **dadurch gekennzeichnet, dass** das reibungsmindernde Antihaft-Material (12) ein Glasfasergewebe oder -band mit einer selbsthaftenden mit Polytetrafluorethylen (PTFE) beschichteten Schicht ist, das an der Oberfläche der Innenkammer (8) anhaftet.

## Revendications

1. Système (2) de matrices de calibrage (7) pour l'extrusion d'un profilé en plastique, ledit système comprenant plusieurs matrices de calibrage (7) consécutives,
chaque matrice de calibrage (7) comprend une moitié inférieure de la matrice de calibrage (10) et une moitié supérieure de la matrice de calibrage (9), dans lequel les moitiés supérieure et inférieure (9, 10) comprennent toutes deux des canaux de refroidissement (15),
dans lequel une chambre intérieure (8) s'étendant dans le sens longitudinal de la matrice de calibrage (7) est formée entre la moitié supérieure et la moitié inférieure (9, 10) de la matrice de calibrage dans la position assemblée de la moitié supérieure et de la moitié inférieure (9, 10), dont la section transversale est conforme au profilé extrudé et
dont la surface est revêtue d'un matériau antifriction anti-adhésif (12) dans lequel se trouve un espace d'observation (11) entre au moins certaines matrices de calibrage consécutives,
**caractérisé en ce que**
le matériau antifriction anti-adhésif (12) est un tissu ou un ruban en fibre de verre avec une couche auto-adhésive recouverte de polytétrafluoroéthylène (PTFE) adhérant à la surface de la chambre intérieure (8).

2. Système (2) de matrices de calibrage selon la revendication 1, **caractérisé en ce que** la première zone de refroidissement et de compression est située dans la première matrice de calibrage (7.1).

3. Système (2) de matrices de calibrage selon une quelconque revendication précédente, **caractérisé en ce que,** dans le sens de l'extrusion du profilé en plastique, les moitiés supérieure et inférieure (9, 10) de la première matrice de calibrage sont connectées de manières rigide et détachable l'une par rapport à l'autre, et les moitiés supérieure et inférieure (9, 10) des matrices de calibrage restantes (7) sont maintenues ensemble pendant l'extrusion avec la pression appliquée aux moitiés supérieures par des vérins pneumatiques ou hydrauliques (14) ou tout autre mécanisme à objectif similaire.

4. Système (2) de matrices de calibrage selon la revendication 3, **caractérisé en ce que** les vérins pneumatiques ou hydrauliques (14) ou tout autre mécanisme à objectif similaire sont configurés pour soulever les moitiés supérieures (9) des matrices de calibrage (7) à partir des moitiés inférieures (10).

5. Système (2) de matrices de calibrage selon une quelconque revendication précédente, **caractérisé en ce qu'au** moins certaines matrices de calibrage (7) du système (2) sont réalisées sous forme de modules échangeables similaires.

6. Système (2) de matrices de calibrage selon l'une quelconque des revendications précédentes 1 à 4, **caractérisé en ce que** toutes les matrices de calibrage (7) du système (2) sont réalisées sous forme de modules échangeables similaires.

7. Système (2) de matrices de calibrage selon une quelconque revendication précédente, **caractérisé en ce que** des zones de refroidissement et de calibrage avec des températures différentes sont formées dans les matrices de calibrage (7.4, 7.5, 7.6) séparées par un espace d'observation (11).

8. Matrice de calibrage (7) destinée à être utilisée dans un système (2) de matrices de calibrage selon l'une quelconque des revendications 1 à 7 pour extruder un profilé en plastique, la matrice de calibrage (7) comprend une moitié inférieure de la matrice de calibrage (10) et une moitié supérieure de la matrice de calibrage (9), dans laquelle les moitiés supérieure et inférieure (9, 10) comprennent toutes deux des canaux de refroidissement (15) et une chambre intérieure (8) s'étendant dans le sens longitudinal de la matrice de calibrage (7) est formée entre la moitié supérieure et la moitié inférieure (9, 10) de la matrice de calibrage en position assemblée de la moitié supérieure et de la moitié inférieure (9, 10), dont la section transversale est conforme au profilé extrudé et dont la surface est revêtue d'un matériau antifriction anti-adhésif (12), **caractérisée en ce que** le matériau antifriction anti-adhésif (12) est un tissu ou un ruban en fibre de verre avec une couche auto-adhésive recouverte de polytétrafluoroéthylène (PTFE) adhérant à la surface de la chambre intérieure (8).
